# EUROPÄISCHE PATENTSCHRIFT

(11) **EP 1 016 624 B1**
(45) Veröffentlichungstag und Bekanntmachung des Hinweises auf die Patenterteilung: **24.07.2002**
(21) Anmeldenummer: 99204377.8
(22) Anmeldetag: 17.12.1999
(51) Int. Cl.: C01B 31/34

(54) **Gaskarburierungsverfahren zur Herstellung von reinem WC-Pulver**
Gas carburising process for preparing pure WC-powder
Procédé de carburation gazeuse pour la préparation de poudre pure de WC

(30) Priorität: 28.12.1998 AT 86398 U
(43) Veröffentlichungstag der Anmeldung: 05.07.2000
(73) Patentinhaber: Plansee Tizit Aktiengesellschaft, 6600 Reutte /Tirol (AT)
(72) Erfinder: Lackner, Andreas Dr., 6600 Reutte (AT); Filzwieser, Andreas, 8740 Zeltweg (AT)
(74) Vertreter: Lohnert, Wolfgang, Dr.

(56) Entgegenhaltungen:
- EP-A- 0 286 294
- EP-A- 0 846 658
- EP-A- 0 846 659
- WO-A-93/10042
- WO-A-97/16275
- DD-A- 290 859
- FR-A- 1 237 494
- NEWKIRK A E ET AL: "THE PREPARATION OF TUNGSTEN CARBIDE" JOURNAL OF THE AMERICAN CHEMICAL SOCIETY,US,AMERICAN CHEMICAL SOCIETY, WASHINGTON, DC, Bd. 79, Nr. 17, 11. September 1957 (1957-09-11), Seiten 4629-4631, XP002054034 ISSN: 0002-7863

## Beschreibung

Die Erfindung betrifft ein Gaskarburierungsverfahren zur Herstellung von feinkörnigem WC-Pulver, das keine in einer XRD-Analyse nachweisbaren Fremdphasen aufweist, mit einer mittleren Primärkomgröße > 0,2 µm und < 5 µm mit einem Karburierungsgrad > 96 % bei einem freien Kohlenstoffgehalt < 0,1 Gew.% in Anlagen für Fließbettreaktion, vorzugsweise in einer Wirbelschichtanlage, ausgehend von nicht granuliertem fließfähigem Wolframoder wolframoxidhaltigem Pulver einer mittleren Korngröße d₅₀ > 10 µm als dem zu karburierenden Gut und von kohlenstoffhaltigem Prozessgas in Form eines COₓ/H₂-Gasgemisches, mit X = 1 und/oder 2, oder eines Gemisches aus Kohlenwasserstoffgas und H₂, ggf. mit kleinen Anteilen an H₂O-Dampf.

Wolframkarbidpulver ist seit den Anfängen der industriellen Hartmetallfertigung ein hierfür unverändert wichtiges Ausgangsmaterial. Zu dessen Herstellung wurde über Jahrzehnte Wolframoxidpulver oder Pulver wolframoxidhaltiger Verbindungen in Schiffchen gefüllt, unter reduzierender Atmosphäre während > 10 Stunden zu Wolframpulver reduziert, das Wolframpulver anschließend mit Kohlenstoffpulver vermischt und wiederum in ein Schiffchen gefüllt und während eines mehrere Stunden dauernden Prozesses, mittels Kohlenstoffdiffusion in die Wolframkörner, zu Wolframkarbid reagiert. Entsprechend den technisch verfügbaren Korngrößen für das durch Reduktion der Oxide erhältliche W-Metall wurden Wolframkarbidpulver mit Korngrößenuntergrenzen von einigen µm Durchmesser erzeugt.

Mit der Weiterentwicklung verbesserter Hartmetallqualitäten im Laufe der vergangenen zwei Jahrzehnte und der verstärkten Forderung nach sogenannten Submikron-Wolframkarbid-Pulverqualitäten gewinnen neben der Karburierung über Kohlenstoffdiffusion zusätzlich Gaskarburierungsverfahren an Bedeutung. Wie der Name sagt, erfolgt bei letzteren Verfahren die Karburierung des Wolframs mittels über die Gasphase an die Wolframoberfläche transportieren Kohlenstoffs. Es sind auch Verfahren bekannt, bei denen die Wolframkarburierung sowohl über dem W-Pulver beigefügten festen Kohlenstoff, als auch über kohlenstoffhaltige Gase erfolgt. Mit der Anwendung der Gasphasenreaktion durfte eine wesentliche Reduzierung der Prozesszeit und Vereinfachung der Prozesssteuerung erwartet werden, vor allem weil über die Kontrolle und Dotierung der Gasphase eine unerwünschte Abscheidung von freiem Kohlenstoff thermodynamisch beherrschbar erschien. Daneben durfte erwartet werden, dass sich je nach Prozesstemperatur die beim Diffusionsprozess infolge langer Prozesszeiten unvermeidliche Kornvergröberung in bereits gebildetem WC vermeiden bzw. innerhalb vertretbarer Grenzen halten ließ.
Gaskarburierungsverfahren finden im Fließbett, üblicherweise im Drehrohrofen oder in der Wirbelschichtkammer statt. Entsprechende Anlagen arbeiten hinsichtlich des zu karburierenden Gutes kontinuierlich oder in einer Folge mit jeweils vorgegebenen Füllmengen.

Grobkörniges, dichtes Wolframkarbidpulver lässt sich technisch nicht zerkleinern, bzw. zu Pulvern einer Korngröße < 1 µm, sogenannten Submikron-Pulvern, zermahlen. Es erschien daher angezeigt, über die Verwendung von Submikron-Ausgangspulvem als dem zu karburierenden Gut über den Prozess der Gaskarburierung zu Submikron-Wolframkarbidpulver zu gelangen.
Tatsächlich traten bei der Umsetzung obiger Vorstellungen jedoch eine Vielzahl von Schwierigkeiten auf, die sich in einer großen Zahl verschiedenartiger Vorschläge für die Prozessführung niederschlägt.

Unter den Verfahrensentwicklungen zur Fertigung von Submikron- bzw. nanokristallinem Wolframkarbidpulver bzw. WC-Co-Pulver mittels Gaskarburierung haben sich vor allem zwei Verfahren als erwiesen und sollen nachfolgend stellvertretend an Hand der US PS 5 372 797 sowie EP B 0 598 040 näher beschrieben werden.

In der US PS 5 372 797 wird ein Verfahren zur Herstellung von Wolframkarbid der Teilchengröße 50 bis 200 nm beschrieben. Dazu wird ein festes Wolfram enthaltendes Ausgangsmaterial in einer strömenden Gasatmosphäre, welche Wasserstoff und molekulares Methan enthält, "so lange reagiert, bis praktisch alles Wolframvormaterial zu WC umgewandelt ist". Die Reaktion findet in zwei Prozessabschnitten statt, einem ersten bei 520° bis etwa 550°C und einem zweiten, mit einer Aufheizrate von 3° bis 10° pro Minute, bei etwa 800° bis etwa 900°C. Dabei werden der Temperaturanstieg und Partialdruck des sich bildenden Wassers derart kontrolliert, dass "die genannte Pulverkorngröße erzeugt wird". Laut Hauptanspruch ist mindestens 50 % des Wolframkarbids der Teilchengröße 50 bis 200 nm während mindestens 15 Minuten Reaktionszeit im zweiten Prozessabschnitt zu bilden. Das so erzeugte Wolframkarbid hat eine BET-Oberfläche von 1 bis 10 m²/g, während das wolframhaltige Ausgangsmaterial eine BET-Oberfläche von 0,01 bis 0,09 m²/g besitzen soll, gleichzeitig aber als handelsübliches "GTE TO3"-Wolfram-Trioxidpulver einer mittleren Teilchengröße zwischen etwa 10 bis 30 µm beschrieben wird.
Gemäß Ausführungsbeispiel 1 besteht das Reaktionsgas aus 3 % molekularem Methan und 97 % molekularem Wasserstoff. Die erste Teilreaktion erfolgt nach dem Aufheizen mit einer Aufheizrate von 20°C pro Minute auf 535°C Prozesstemperatur, die zweite während einer für 90 Minuten aufrechterhaltenen Prozesstemperatur von 850°C, welche mit einer Aufheizrate von 5°C angesteuert wird.
Nach einzelnen bevorzugten Ausführungsbeispielen findet der Prozess in einem horizontalen Rohrofen statt, den das zu karburierende Gut durchläuft.

Der gesamte Prozess wird über eine genaue Überwachung der Gewichtsänderung des zu karburierenden Gutes in seinen Teilprozessen gesteuert. Anschließend an den Reduzierungsschritt zu W-Pulver folgt eine weitgehend vollständige Umwandlung zu W₂C (siehe Beispiel 1), ehe im weiteren Teilprozess WC gebildet wird.

Laut Beispiel 2 von US PS 5 372 797 hat das Wolframkarbid-Endprodukt einen Gesamtkohlenstoffgehalt von 6,13 Gew.%, die BET-Oberfläche des Pulvers wurde mit 4,0 m²/g bestimmt.
Nachteilig bei dem genannten Verfahren ist, dass entsprechende Versuche nur im Thermowaagenaggregat bzw. in einem Ausnahmefall in einem Minilaborofen mit Reaktionsmengen bis zu 20 g Füllmenge durchgeführt wurden und sich mangels ausreichender Steuerung kritischer Prozessparameter nicht auf kommerzielle Fertigungsmaßstäbe übertragen lassen. Die dort vorgeschriebene, sehr komplexe Prozessführung - insbesondere die exakte Temperaturführung in Korrelation zum H₂O-Partialdruck im Bereich des zu karburierenden Gutes - lässt sich nicht wirtschaftlich auf Einrichtungen zur industriellen Wolframkarbidfertigung übertragen und ist bei üblichen Schüttungen des zu karburierenden Gutes in üblichen Industrieanlagen technisch nicht machbar.
Nach diesem Prozess hergestellte WC-Pulver enthalten stets in XRD-Aufnahmen nachweisbare, unerwünschte W₂C-Pulveranteile und in aller Regel unerwünschten freien Kohlenstoff.

Die EP B 0 598 040 beschreibt einen karbothermischen Reaktionsprozess zur Herstellung von Nanophasen Metall/Metallkarbid Teilchen, z.B. WC-Co-Pulver. Das Gesamtverfahren ist in drei Abschnitte unterteilt, wobei nach Schritt 1 ein poröses Vorstufenteilchen bereitzustellen ist, das als Substrat für das Eindringen von Kohlenwasserstoff wirkt. In einem zweiten Schritt Kohlenstoff aus einem als Kohlenstoffquelle dienenden Gas bei einer Kohlenstoffaktivität a_{c} ≥1,0 in die porösen Vorstufenteilchen eindringen lässt und in einem abschließenden Schritt gleichzeitig Kohlenstoff und das als Kohlenstoffquelle dienende Gas derart mit den Vorstufenpulverteilchen zur Reaktion gebracht wird, dass mindestens eine Karbidphase gebildet und verbleibender, nicht umgesetzter Kohlenstoff durch Vergasen mit einem zweiten Gas, welches sich mit Kohlenstoff wieder vereinigen kann, entfernt wird.
Die porösen Vorstufenteilchen werden laut Beschreibung in einer aufwendigen Nassreaktion aus bekannten Wolframoxid-Vorstufen, wie H₂WO₄ oder Ammonium-Parawolframat über chemische Auflösung und Sprühtrocknung hergestellt. Co(EN)₃WO₄ oder auch AMT-Co-Cl₂ sind solche Vorstufenmaterialien - AMT = Abkürzung für das teure Ammonium-Meta-Wolframat.
Die Karburierungsreaktion findet bevorzugt im Fließbett statt. Als Prozesstemperatur werden 700° - 850°C angegeben. Als Prozessgas für die WC-Reaktion wird CO-Gas verwendet, was automatisch eine Kohlenstoffaktivität a_{c} > 1 bedeutet. Um angefallenen, nicht reagierten freien Kohlenstoff nach dem eigentlichen WC-Karburierungsprozess aus der Reaktionszone zu entfernen, wird die Prozessatmosphäre auf eine Mischung aus CO und CO₂ oder CO/H₂ sowie CH₄H₂ mit einer Kohlenstoffaktivität von etwa 0,5 geändert, was die Umsetzung C + CO₂ zu 2 CO ermöglicht.

Als Alternative wird in der EP B 0 598 040 vorgeschlagen, bereits bei der Präparierung des Vorstufenmaterials freien Kohlenstoff zuzugeben.
Laut Auswertung einer Mikrostrukturanalyse wird WC-Pulver einer Korngröße zwischen 30 - 100 nm erhalten.
Bei diesem Verfahren wird im Falle der WC-Co-Reaktion der bekannte Effekt genutzt, dass Kobalt als Katalysator für die Prozessschritte dient.

Nachteilig bei diesem Prozess ist die aufwendige Vorbehandlung üblicher wolframoxidhaltiger Vormaterialien über Salzlösungen zum sprühgetrockneten, . porösen Wolfram und Kohlenstoff enthaltenen Vorstufenmaterial. Es wird ausschließlich ein Metall/Metallkarbidgemisch, z.B. WC-Co erzeugt, was teilweise erwünscht, in anderen Fällen aber unerwünscht ist. Durch die zwingend vorgegebene Prozessführung bei Kohlenstoffaktivitäten a_{c} ≥ 1, bzw. regelmäßig wesentlich größer als 1, erfolgt die gewünschte Umsetzung zum WC und nicht zum unerwünschten W₂C erst bei sehr hohen Gesamtkohlenstoffgehalten von oder oberhalb etwa 20 %. Das wiederum macht die in der Beschreibung genannte zeitlich aufwendige Nachbehandlung mit CO, CO₂ oder CO/H₂-Gasgemischen niedriger Kohlenstoffaktivität (a_{c} < 1) unvermeidlich, um zuvor unvermeidlich gebildeten, freien Kohlenstoff reaktiv zu binden und über die Gasatmosphäre zu entfernen. Im ersten Prozessabschnitt der WC-Formierung ist aber ein a_{c} > 1 aus wirtschaftlichen Gründen unverzichtbar, denn bei a_{c}< 1 und wegen einer aus Gründen der Korngrößen-Stabilisierung möglichst nicht zu überschreitenden-Prozesstemperatur von ca. 800°C ergeben sich unakzeptierbare Prozesszeiten von bis zu 20 Stunden.
Eine Reaktionstemperatur zwischen 700° und 850°C bedeutet grundsätzlich lange Prozesszeiten, selbst bei Beschränkung auf Metall/Metallkarbidgemisch-Bildung in Nutzung der oben erwähnten katalytischen Wirkung des Metalles. Wesentliche Nachteile dieses Verfahrens sind somit die aufwendige Vormaterialpräparierung und die insgesamt lange Prozesszeit.

Für die Durchführbarkeit obigen Verfahrens müssen aus dem zu karburierenden Gut fluidisierbare, großvolumige Granulate gebildet werden, die ihrerseits nach der WC-Umwandlung nur schwer mahlbar bzw. technisch höchst unbefriedigend zu Nanophasenteilchen deagglomerierbar sind.

Entsprechend ist eine Weiterverarbeitbarkeit so gewonnener WC-Co-Pulver nur in Anwendung von Kornwachstums-Inhibitoren zu brauchbarem Submikron-WC-Hartmetall verarbeitbar.
Die üblicherweise erzielbare WC-Kömung im Hartmetall liegt bei 0,6 bis 0,8 µm.

Aufgabe vorliegender Erfindung ist es daher, ein zu feinkörnigem Submikron-Hartmetall verarbeitbares, reines Wolframkarbidpulver in einem einzigen Prozessschritt herzustellen, wobei das anzuwendende Verfahren die weiter vorne geschilderten Nachteile nicht aufweisen soll. Für einen vergleichsweise einfachen, d.h. auch im großindustriellen Maßstab beherrschbaren Fliessbett-Gasphasenprozess soll eine aufwendige Vorbehandlung des zu karburierenden Gutes ebenso entfallen, wie zeitaufwendige und damit teure, dem eigentlichen Karburierungsprozess nachgeschaltete Reaktionen zur Stabilisierung der für eine Hartmetallfertigung unverzichtbaren, reinen Wolframkarbidphase, die frei ist von Anteilen an unerwünschtem freiem Kohlenstoff.
Das Verfahren soll gleichermaßen geeignet sein, für die Verwendung von wolframoxidhaltigen, pulverförmigen Vormaterialien, wie auch für - bereits reduziertes - Wolframpulver als dem zu karburierenden Gut.

Diese Aufgabe wird durch ein Verfahren gemäß Anspruch 1, insbesondere seines kennzeichnenden Teils gelöst.
Besonders vorteilhafte Ausgestaltungen des Verfahrens sind diejenigen entsprechend der Unteransprüche.

Im Hauptanspruch ist der dort verwendete Begriff "mittlerer Korndurchmesser d₅₀" definiert als derjenige Korndurchmesser, dem in einer Lasergranulometrie-Messung (Methode nass) 50 % der Korngrößendichteverteilung entsprechen.

Unter dem ebenfalls im Hauptanspruch verwendeten Begriff "mittlere Primärkorngröße" ist, bezogen auf das gebildete WC jene WC-Einzelkorngröße zu verstehen, die ein vollständig deagglomeriertes WC-Pulver aufweist und sowohl optisch in einer Rasterelektronenmikroskopie-Aufnahme bei 20.000-facher Vergrößerung durchschnittlich ermittelt wird, als sich auch mit dem Wert nach der d₅₀-Definition deckt.
Der Karburierungsgrad ist definiert als Prozentangabe, wobei 100 % Karburiergrad der stöchiometrischen Menge von 6,13 Gew.% c_{gesamt} in WC entsprechen.
Der Begriff "XRD-Analyse" steht für Röntgenbeugungsanalyse (X-Ray Diffraction).

Das in einem einzigen Prozessschritt durchführbare Verfahren umfasst gleichwohl unterschiedliche chemische Reaktionen, je nachdem ob ein wolframoxidhaltiges Pulver zunächst weitgehend vollständig zu W reduziert und anschließend zu WC karburiert, oder ausgehend vom W-Metallpulver zu WC karburiert werden muss.

Unter dem Begriff "wolframoxidhaltige" Pulver sind neben dem reinem WO₃ und WBO = Wolfram Blau Oxid auch sämtliche für den Reduktionsschritt üblicherweise verwendete Vormaterialien zu verstehen, wie Ammonium-Para-Wolframat und Wolframsäure.

Unter den verschiedenen, auf dem Markt erhältlichen W-Pulverqualitäten hat diejenige zu einer herausragenden WC-Qualität geführt, die nach dem Verfahren gemäß WO-A-97/16275 erzeugt wurde.

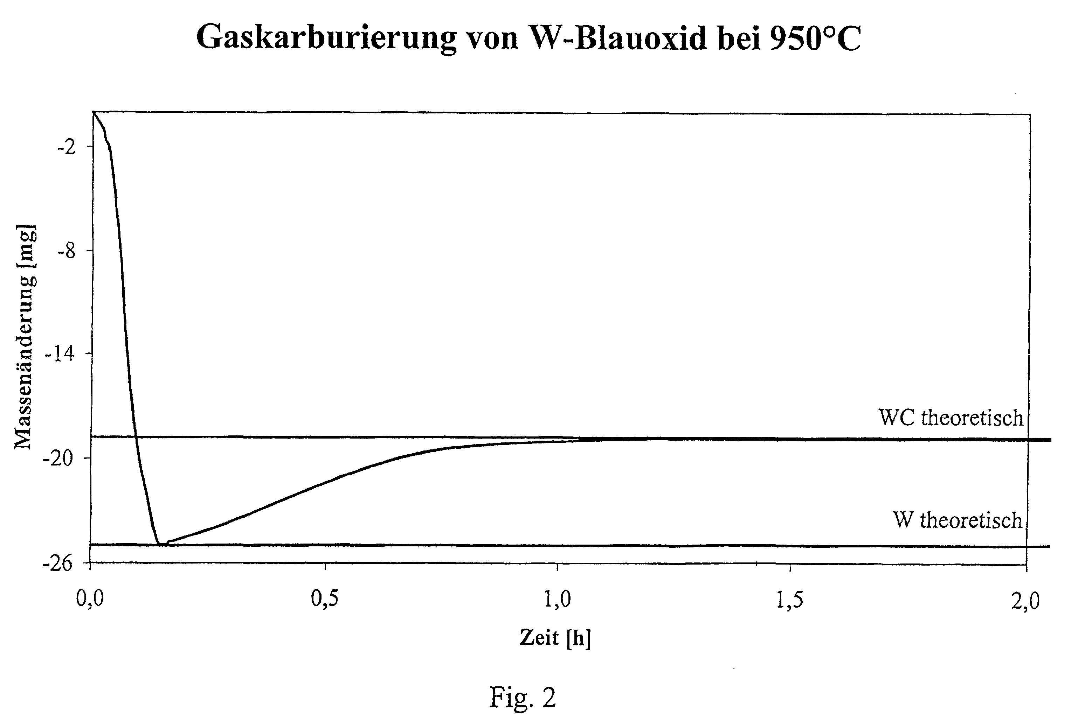

Mit der später beschriebenen Figur 2 ist überzeugend belegt, dass der Karburierungsprozess durchaus auch über das Zwischenprodukt W₂C erfolgt, dass gemäß dem erfindungsgemäßen Verfahren und im Unterschied zum zitierten Stand der Technik das Wolfram aber nicht in einer ersten Reaktionsstufe vollständig zu W₂C und W₂C anschließend zu WC weiter reagiert wird, sondern die Bildung von W₂C und die Weiterreaktion zu WC während der gesamten Prozessdauer gleichzeitig und parallel erfolgen.

Für den Fall, dass der einzige Prozessschritt mit einer Reduktion von wolframoxidhaltigen Pulvern beginnt, wird dem nach Erreichen der Prozesstemperatur in die Reaktionskammer einströmenden Prozessgas während der Reduktionsphase vorteilhafterweise ein kleiner Anteil an H₂O-Dampf < 5 Vol.% am Gesamtprozessgas beigegeben.
Mit der Durchführung des Prozesses in einem einzigen Prozessschritt lässt sich eine Rückreaktion bereits gebildeten W-Pulvers zu Oxidpulver wirkungsvoll verhindern.

Unter den Gaskarburierungsreaktionen im Fließbett haben das Wirbelschichtverfahren in einer Wirbelschichtanlage und das Drehrohrofen-Verfahren die breiteste Anwendung gefunden.

Das zu karburierende pulverförmige Gut kann je nach Anlagentyp kontinuierlich durch eine Anlage hindurchwandern oder portionsweise nacheinander, jeweils in einem abgeschlossenen einzigen Prozessschritt behandelt werden.

Während der Aufheiz- und Abkühlperiode vor und nach dem eigentlichen Prozess wird die Anlage regelmäßig mit durchströmendem Inertgas beaufschlagt. Das Prozessgas wird erste bei Erreichen der Prozesstemperatur eingelassen. Es durchströmt die Anlage, wird nach dem Auslass von unbrauchbaren Reaktionsprodukten gereinigt, wird wieder auf die vorgegebene Prozessgasmischung eingeregelt und wird schließlich dem Prozess erneut zugeführt.

Der Karburierungsgrad für die Reaktion zu WC ist mit einem unteren Grenzwert > 96 % angegeben, erreicht in Praxis aber regelmäßig 98 bis 99,5 %.
Der Gehalt an freiem Kohlenstoff, C_{frei} ist mit dem Grenzwert < 0,1 Gew.% angegeben. In praktischen Versuchen wurden vielfach 0,01 Gew.% und weniger erreicht.
Die Prozessdauer, d.h. die Verweilzeit des zu karburierenden Gutes auf Prozesstemperatur und in Anwesenheit des strömenden Prozessgases hängt von der Schüttdicke bzw. Wirbelbetthöhe des zu karburierenden Gutes im Fließbett ab. Es hat sich indes als vorteilhaft und durchführbar erwiesen, die Prozessdauer im Fall erfindungsgemäßer Prozesstemperatur bei Zeiten < 60 min zu halten, falls von W-Pulver als dem zu karburierenden Gut ausgegangen wird.
Bei wolframoxidhaltigem Pulver als dem zu karburierenden Gut liegt die vorteilhafte Prozessdauer bei Zeiten < 100 min.

Wesentlicher Vorteil vorliegender Erfindung gegenüber Verfahren nach dem Stand der Technik sind die industrielle Anwendbarkeit des Verfahrens in Nutzung vorhandener Anlagentypen bei vergleichsweise wirtschaftlicherer Herstellbarkeit von Wolframkarbidpulver in einer hochwertigen Qualität. Das nach vorliegendem Verfahren gefertigte Wolframkarbidpulver führt, gemessen an dem Prozessaufwand, zu in diesem Ausmaß nicht vorhersehbar guter Hartmetallqualität mit sehr gleichförmiger Submikron-Korngröße bei hoher Festigkeit und hoher Zähigkeit. Mit ein Grund für die gute Verarbeitbarkeit des so erzeugten Wolframkarbidpulvers und für die gute mit ihm erreichte Hartmetallqualität ist die gute Mahlbarkeit und Deagglomerierbarkeit des Wolframkarbids, bedingt durch die hochporöse Makrostruktur innerhalb eines einzelnen Korns. Das nach dem vorliegenden Verfahren hergestellte WC ist gut zu Presslingen verarbeitbar.
Die wirtschaftlichen Vorteile des erfindungsgemäßen Verfahrens gegenüber dem bekannten Stand der Technik ergeben sich einmal daraus, dass das zu karburierende Gut keiner aufwendigen und teuren Vorbehandlung unterzogen werden muss. Die Wirtschaftlichkeit ergibt sich zum zweiten aus einer in diesem Ausmaß überraschenden, nicht vorhersehbaren kurzen Gesamtprozessdauer in einem einzigen Prozessschritt bei unerwartet hoher Prozessausbeute an reinem Wolframkarbidpulver.
Die vergleichsweise kurze Prozessdauer beim vorliegenden Verfahren war für den Fachmann überraschend, weil von grobem und damit aber fluidisierbarem und gut fließfähigem Pulverkorn als dem zu karburierende Gut ausgegangen wird, während nach den bekannten Verfahren ein möglichst feinkörniges Submikron-Pulver verwendet wird, das dann ggf. durch spezielle Granulierungsverfahren in makroskopisch große Pulverkörner überführt wird.

Des weiteren war für den Fachmann die sich aufgrund der Kombination der Verfahrensbedingungen gemäß erfinderischem Verfahren tatsächlich ergebende, hohe Prozesseffizienz, nicht vorhersehbar. Die Verfahren nach dem Stand der Technik zeigen entweder niedrige Prozesseffizienz, d.h. neben dem gewünschten Endprodukt Wolframkarbid werden verschiedene unerwünschte Nebenprodukte oder nicht reagierte Vorprodukte erhalten, die dann in einem wiederholten Kreislauf aufzuarbeiten sind, oder es müssen dem eigentlichen Karburierungsprozess einzelne Vor- und/oder Nachbehandlungen angeschlossen werden, um die gewünschte Karbidreaktion in vertretbarer Prozesszeit überhaupt erst zu ermöglichen und andernfalls störende Neben-Reaktionsprodukte zu vermeiden bzw. rückgängig zu machen.

Die vorliegende Erfindung ist hinsichtlich der erfindungsgemäßen Kombination der Verfahrensbedingungen von der überraschenden Erkenntnis bestimmt, dass nicht die für den Fachmann klassischen, bisher angewendeten Gesetzmäßigkeiten zielführend sind, das sind für eine Karburierungsreaktion möglichst viel in Gasform vorliegenden Kohlenstoff bei Kohlenstoffaktivitäten a_{c} weit über 1 bereitzustellen, wodurch sich gemäß vorliegender Erfindung eine sprunghaft höhere Wirtschaftlichkeit des Karburierungsverfahrens bei gleichzeitig unerwartet hoher Qualität des erzeugten Wolframkarbids und des daraus gefertigten Wolframkarbid-Kobalt-Hartmetalls ergeben.

Die innerhalb des beanspruchten WC-Korngrößenbereichs > 0,2 und < 5 µm tatsächlich gewünschte Korngröße lässt sich ausschließlich durch Kontrolle und Steuerung der erfindungswesentlichen Prozessparameter innerhalb sehr kleiner Korngrößen-Bandbreiten herstellen.

Die Erfindung wird nachfolgend an Hand der Beispiele näher erläutert.
Sie ist indes nicht auf die genannten Ausführungsbeispiele beschränkt.
Die Beispiele decken in hohem Ausmaß die erfindungswesentlichen Merkmalbereiche ab und geben einen Vergleich zu den nach dem Stand der Technik beschriebenen Verfahren.

An Hand einzelner Beispiele wird der Tatsache besondere Bedeutung beigemessen, dass das erfindungsgemäße Verfahren im Labormaßstab (Thermowaage) erprobt, gleichermaßen aber auch ohne Qualitätsverlust auf Industriemaßstab übertragbar ist.

Die Beispiele 1 und 2 zeigen Ausführungen des erfindungsgemäßen Verfahrens, durchgeführt in einer Thermowaagenanlage mit Pulverproben im Mengenbereich von Milligramm.
Beispiel 2 unterscheidet sich von Beispiel 1 durch das Prozessgas.
Im Beispiel 2 liegt die Kohlenstoffaktivität a_{c} näher bei 1.
Die Beispiele 3, 4, 5 und 6 sind reine Vergleichsbeispiele bei Anwendungen von durch vorliegende Erfindung nicht vollständig abgedeckten Verfahrensparametern.
Im Einzelnen ist in Beispiel 3 das Prozessgasgemisch so eingestellt, dass die Kohlenstoffaktivität a_{c} > 1, ist was die Bildung von freiem Kohlenstoff zur Folge hat.
In Beispiel 4 liegt die Korngröße des Wolfram-Ausgangsmaterials außerhalb des erfindungsgemäßen Bereiches.
In Beispiel 5 ist die Korngröße des Ausgangsmaterials zwar größer als die nach Beispiel 4, sie liegt aber gleichwohl außerhalb des erfindungsgemäßen Bereiches.
In Beispiel 6 wurde dem Ausgangsmaterial entsprechend Beispiel 1, Kobaltpulver beigegeben - entsprechend dem genannten Stand der Technik aber im Unterschied zum erfinderischen Verfahren.
Die Beispiele 7 bis 11 und 14 beschreiben Ausgestaltungen des Verfahrens gemäß Erfindung.
Es erfolgt in den einzelnen Beispielen eine stufenweise Verfahrensanpassung an kommerzielle Bedingungen. Die Beispiele 12 und 13 sind hinsichtlich der erfindungswesentlichen Korngröße des Ausgangsmaterials entsprechend Beispiel 4 und 5 nicht erfinderische Vergleiche.
Beispiel 15 zeigt die Weiterverarbeitung von WC aus Beispiel 14 zu Hartmetall.

### Beispiel 1:

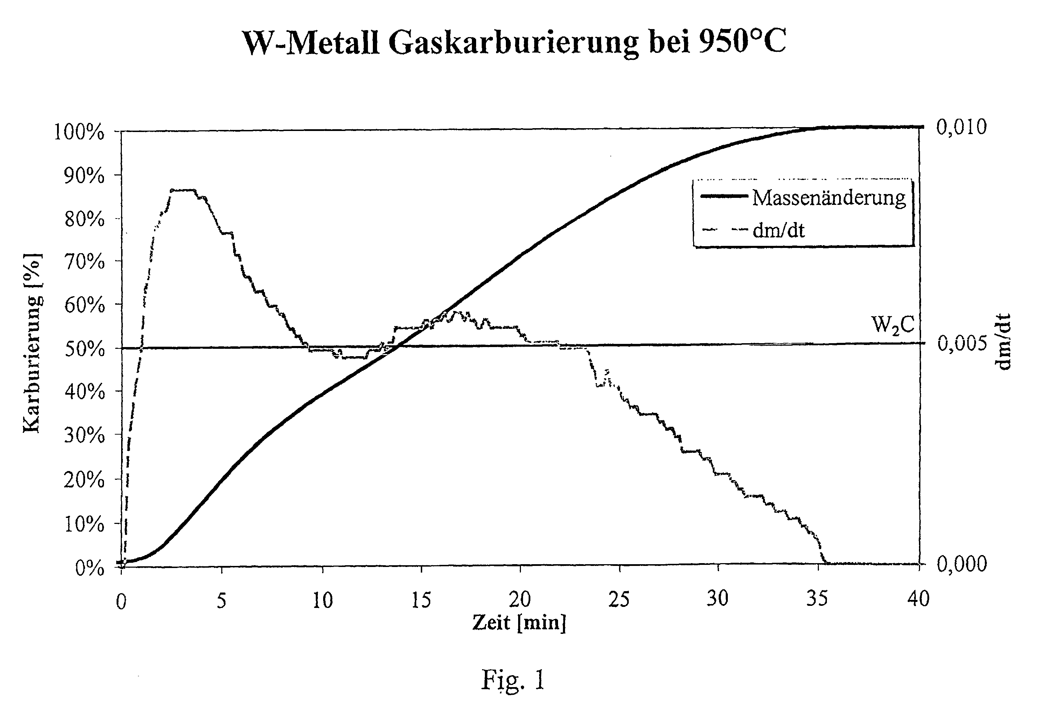

Eine Probemenge W-Metallpulver, hergestellt nach dem Verfahren in WO-A-97/16275 (d₅₀ = 35 µm (lasergranulometrisch ermittelt), BET = 2,16 m²/g) von 100 mg wurde in eine Schale (Durchmesser 16 mm) gleichmäßig verteilt und in einer CAHN-Thermogravimetrieanlage/Thermowaage (TGA) (Modell TG-171) unter Inertgas (Ar) mit einer Durchflussrate von 6 l/h möglichst rasch (z.B.: 25 °C/min) auf die isotherme Versuchstemperatur von 950°C aufgeheizt. Danach wurde auf das Prozessgasgemisch (a_{c} < 1) 40 % CO / 60 % H₂ (Gesamtdurchflussrate: 6 l/h) umgeschaltet und die Massenzunahme registriert. Wie in Figur 1 deutlich wird nach rund 35 Minuten das Reaktionsende bei einem Karburiergrad von 98,7 % (+/- 1 %) erreicht, wobei der gesamte Versuch erst nach 2,5 Stunden ohne weitere Massenzunahme und daher ohne C_{frei} Aufnahme beendet wurde und danach in 3 Stunden auf Raumtemperatur abgekühlt wurde. Wie aus der Ableitung der TGA-Kurve in Figur 1 ersichtlich, ist eine Änderung der Karburiergeschwindigkeit bei genau 50 % Karburiergrad ersichtlich, jedoch kommt es wie die stetige Massenzunahme zeigt nur zu einer teilweisen Umwandlung zu W₂C, aber gleichzeitigen Weiterreaktion zu WC. Eine XRD-Analyse ergab reines WC bei 20.000-facher Vergrößerung zeigte eine mittlere WC-Primärkorngröße (Mikrostruktur) in der schwammstrukturierten Makrostruktur von 0,25 µm.

### Beispiel 2:

Versuchsablauf und Einsatzmaterial wie Beispiel 1. Nach dem Aufheizen auf 950°C wurde auf das Prozessgasgemisch (a_{c} < 1, jedoch näher bei 1 als in Beispiel 1) 60 % CO / 40 % H₂ (Gesamtdurchflussrate: 6 l/h) umgeschaltet und die Massenzunahme registriert. Dabei wurde das Reaktionsende bereits nach weniger als 20 Minuten erreicht. Der aus der TGA ermittelte Karburiergrad beträgt 98,6 %. Auch dieser Versuch wurde ohne C_{frei} Bildung - wie aus der TGA-Kurve ersichtlich - beendet. Eine XRD-Analyse ergab reines WC ohne Spuren von W₂C oder W. Eine Kohlenstoffanalyse (LECO) ergab 6,10 % C_{gesamt} und < 0,01 % C_{frei}. Eine REM-Aufnahme bei 20.000-facher Vergrößerung zeigte eine mittlere WC-Primärkorngröße (Mikrostruktur) in der schwammstrukturierten Makrostruktur von 0,26 µm.

### Beispiel 3:

Versuchsablauf und Einsatzmaterial wie Beispiel 1, jedoch wurde im Unterschied zu Beispiel 1 mit einem Prozessgasgemisch von a_{c} >1 gearbeitet. Nach dem Aufheizen auf 950°C würde auf das Prozessgasgemisch (a_{c} > 1) 99 % CO / 1 % H₂ (Gesamtdurchflussrate: 6 l/h) umgeschaltet und die Massenzunahme registriert. Dabei wurde nach 55 Minuten der 100 % Karburiergrad überschritten und eine stetige Massenzunahme, die der Entstehung von C_{frei} zuzuordnen ist, bis Versuchsabbruch nach 15 Stunden registriert. Der aus der TGA ermittelte Karburiergrad beträgt 109,8 %. Eine XRD-Analyse ergab zwar reines WC ohne Spuren von W₂C oder W, aber die Kohlenstoffanalyse (LECO) ergab 6,84 % C_{gesamt} und > 0,6% C_{frei}.

### Beispiel 4:

Versuchsablauf wie Beispiel 1, jedoch wurde als Ausgangsmaterial Standard W 0,6 µm (Fischer Subsieve Size = 0,62µm, d₅₀ = 0,46 µm lasergranulometrisch ermittelt) und damit einer Korngröße außerhalb des erfindungsgemäßen Bereiches verwendet. Prozesstemperatur und Gaszusammensetzung wurde wie in Beispiel 1 gewählt. Das Reaktionsende wurde nach ca. 60 Minuten erreicht. Der aus der TGA ermittelte Karburiergrad betrug 98,3 %. Auch dieser Versuch, der jedoch auf Grund der gröberen W-Struktur - fehlende Porosität der Mikrostruktur des W-Metall - fast doppelt solange dauerte wie der Vergleich siehe Beispiel 1 ,wurde ohne C_{frei} Aufnahme - wie aus der TGA-Kurve ersichtlich - beendet. Eine XRD-Analyse ergab reines WC ohne Spuren von W₂C oder W. Eine Kohlenstoffanalyse (LECO) ergab 6,04 % C_{gesamt} und < 0,01 % C_{frei}. Eine REM-Aufnahme bei 20.000-facher Vergrößerung zeigte eine mittlere WC-Primärkorngröße (Mikrostruktur) in der schwammstrukturierten Makrostruktur von 0,6 µm.

### Beispiel 5:

Versuchsablauf wie Beispiel 1, jedoch wurde als Ausgangsmaterial Standard W 5,5 µm (Fischer Subsieve Size = 5,6 µm, d₅₀ = 6,1 µm lasergranulometrisch ermittelt) ) und damit einer Korngröße außerhalb des erfindungsgemäßen Bereiches verwendet. Prozesstemperatur und Gaszusammensetzung wurde wie in Beispiel 1 gewählt. Das Reaktionsende wurde nicht abgewartet, sondern der Versuch nach 15 Stunden abgebrochen. Der aus der TGA ermittelte Karburiergrad beträgt 37,3 %. Eine XRD-Analyse ergab WC und W. Eine Kohlenstoffanalyse (LECO) ergab 2,5 % C_{gesamt} und < 0,01 % C_{frei}, das entspricht einem Karburiergrad von 40,9 %.

### Beispiel 6:

Versuchsablauf und Einsatzmaterial wie Beispiel 1, jedoch wurde dem Ausgangsmaterial 10 mg superfeines Co (Standardqualität Co "UMEX 0,9 - Ultrafein" von Union Miniere) in Anlehnung an EP 0 598 040 beigegeben. Bei der dabei registrierten Massenzunahme zeigte sich, dass durch die katalytische Wirkung die Karburierreaktion schneller einen Karburiergrad von 50 % erreichte (d.h. die Umwandlung zu W₂C wird katalysiert) und danach für rund 20 Minuten die Weiterkarburierung nicht von statten ging bis das gesamte eingesetzte W in W₂C umgewandelt wurde Die Gesamtkarburierung zu WC dauerte auf Grund der dem Fachmann bekannten äußerst langsamen Umwandlung von W₂C in WC 270 Minuten.

### Beispiel 7:

Versuchsablauf und Einsatzmaterial wie Beispiel 1, jedoch wurde in einer ersten Stufe eines Prozess-"Upscaling" an Stelle von 100 mg 6.042 mg Probemenge in einem Keramiktiegel verwendet Nach der Aufheizung auf 950°C wurde auf das Prozessgasgemisch (a_{c} < 1) 40 % CO / 60 % H₂ (Gesamtdurchflussrate: 6 l/h) umgeschaltet und die Massenzunahme registriert. Dabei wird das Reaktionsende nach 1:000 Minuten erreicht. Der aus der TGA ermittelte Karburiergrad beträgt 98,5 %. Auch dieser Versuch wurde ohne C_{frei} Aufnahme beendet. Der Reaktionsmechanismus - auch die zeitliche Ableitung der TGA-Kurve ergab trotz - im Vergleich zu Beispiel 1 - 60-facher Massenbeladung (Einfluss der Höhe der Pulverschüttung) keine Veränderung gegenüber Beispiel 1. Eine XRD-Analyse ergab reines WC ohne Spuren von W₂C oder W. Eine Kohlenstoffanalyse (LECO) ergab 6,05 % C_{gesamt} und < 0,01 % C_{frei}. Eine REM-Aufnahme bei 20.000-facher Vergrößerung zeigte eine mittlere WC-Primärkorngröße (Mikrostruktur) in der schwammstrukturierten Makrostruktur von 0,29 µm.

### Beispiel 8:

Versuchsablauf wie Beispiel 1, jedoch wurde an Stelle von W-Metall 125 mg technisches Blauoxid (d₅₀ = 54,6 µm lasergranulometrisch ermittelt; Rest: NH₃ = 645 ppm, O₂-Gehalt = 19,5 %) verwendet Nach dem Aufheizen auf 950°C wurde auf das Prozessgasgemisch (a_{c} < 1)40 % CO / 60 % H₂ (Gesamtdurchflussrate: 6 l/h) umgeschaltet und die Massenzunahme bzw. -abnahme registriert. Dabei wurde zuerst eine vollständige Reduktion zu W-Metall nach rund 0,14 Stunden und eine nachfolgende stetige Karburierung zu WC-Reaktionsende nach 1,5 Stunden (Karburiergrad > 96 %) - registriert (siehe Figur 2; dm/dt= Massenänderung pro Zeiteinheit). Auch dieser Versuch wurde ohne C_{frei} Aufnahme beendet. Der Reaktionsmechanismus - auch die zeitliche Ableitung der TGA-Kurve ergab keine Veränderung gegenüber Beispiel 1, sieht man von der vollständigen Reduktion zu W-Metall vor der daran direkt anschließenden Karburierung ab. Eine XRD-Analyse ergab reines WC ohne Spuren von W₂C oder W. Eine Kohlenstoffanalyse (LECO) ergab 6,02 % C_{gesamt} und < 0,01 % C_{frei}. Eine REM-Aufnahme bei 20.000-facher Vergrößerung zeigte eine mittlere WC-Primärkorngröße (Mikrostruktur) in der schwammstrukturierten WC-Makrostruktur von ca. 0,6 µm.

### Beispiel 9:

Versuchsablauf wie Beispiel 8, jedoch wurde als Ausgangsmaterial 125 mg technisches Blauoxid (d₅₀ = 51,3 µm lasergranulometrisch ermittelt; Rest: NH₃ = 1.240 ppm, O₂-Gehalt = 19,45 %) verwendet. Nach dem Aufheizen auf 1.050°C wurde auf das Prozessgasgemisch (ac < 1) 40 % CO / 60 % H₂ (Gesamtdurchflussrate: 6 l/h) umgeschaltet und die Massenzunahme bzw. -abnahme registriert. Dabei wurde zuerst eine vollständige Reduktion zu W-Metall nach rund 0,087 Stunden und eine nachfolgende stetige Karburierung zu WC-Reaktionsende nach 1,9 Stunden - registriert. Auch dieser Versuch wurde ohne C_{frei} Aufnahme beendet. Eine XRD-Analyse ergab reines WC ohne Spuren von W₂C oder W. Eine Kohlenstoffanalyse (LECO) ergab 6,12 % C_{gesamt} und < 0,01 % C_{frei}. Eine REM-Aufnahme bei 20.000-facher Vergrößerung zeigte eine mittlere WC-Primärkorngröße (Mikrostruktur) in der schwammstrukturierten WC-Makrostruktur von ca. 0,75 µm.

### Beispiel 10:

Versuchsablauf und Ausgangsmaterial wie Beispiel 8, jedoch wurde mit geändertem Prozessgas gearbeitet. Nach dem Aufheizen auf 950°C wurde auf das Prozessgasgemisch (a_{c} < 1) 1,15 % CH₄/ 98,85 % H₂ (Gesamtdurchflussrate: 6 l/h) umgeschaltet und die Massenzunahme bzw. -abnahme registriert. Dabei wurde zuerst eine vollständige Reduktion zu W-Metall nach rund 0,35 Stunden und eine nachfolgende stetige Karburierung zu WC-Reaktionsende nach 3,9 Stunden - registriert. Auch dieser Versuch wurde ohne C_{frei} Aufnahme beendet. Eine XRD-Analyse ergab WC. Eine Kohlenstoffanalyse (LECO) ergab 6,01 % C_{gesamt} und < 0,03 % C_{frei}. Eine REM-Aufnahme bei 20.000-facher Vergrößerung zeigte eine mittlere WC-Primärkomgröße (Mikrostruktur) in der schwammstrukturierten WC-Makrostruktur von ca. 0,55 µm.

### Beispiel 11:

Ausgangsmaterial wie in Beispiel 1 gewählt, jedoch wurde im Pilotanlagenmaßstab - dem industriellen Maßstab wesentlich näher - gearbeitet mit einer Pulvermenge von 1,6 kg, die wurde in einen Wirbelschichtreaktor mit 10 cm Durchmesser, chargiert wurde. Das Material wurde mit Ar (7 l/min) fluidisiert und dabei von Raumtemperatur in 20 Minuten auf 980°C aufgeheizt. Bei der Prozesstemperatur von 980°C wurde auf die Prozessgasmischung von 40 % CO / 60 % H₂ als Fluidisierungs- und Reaktionsgas umgeschaltet. Nach 5 Stunden Reaktionszeit wurde der Reaktor unter der Fluidisierung unter Ar (7 l/min) bis auf Raumtemperatur abgekühlt. Eine XRD-Analyse ergab reines WC ohne Spuren von W₂C oder W. Eine REM-Aufnahme bei 20.000-facher Vergrößerung zeigte eine mittlere WC-Primärkomgröße (Mikrostruktur) in der schwammstrukturierten WC-Makrostruktur von ca. 0,3 - 0,4 µm.

### Beispiel 12 und 13:

Die Prozessbedingungen und der Wirbelschichtreaktor wurden wie Beispiel 11 gewählt werden, jedoch wurde für Beispiel 12 Ausgangsmaterial entsprechend Beispiel 4 und für Beispiel 13 entsprechend Beispiel 5 und damit Ausgangsmaterial einer Korngröße außerhalb des erfindungsgemäßen Bereiches verwendet. Nach großen Schwierigkeiten eine Fluidisierung dieser Materialien ohne Strähnenbildung und "Abheben" (Clocking der Wirbelschicht) zu erreichen, musste der Versuch bei der Umschaltung auf Prozessgas wegen nicht zu bewerkstelligender Fluidisierung (selbst mit einem mechanischen Rührer, der zur Unterstützung der Fluidisierung - wie dem Fachmann bekannt - bei schwierig zu fluidisierbarem Einatzmaterial Verwendung finden kann) abgebrochen werden.

### Beispiel 14:

Ausgangsmaterial wie in Beispiel 8 gewählt, jedoch wurde im Pilotanlagenmaßstab - dem industriellen Maßstab wesentlich näher - gearbeitet mit einer Pulvermenge von 8,6 kg, die wurde in einen Wirbelschichtreaktor mit 15 cm Durchmesser chargiert wurde.
Das Material wurde mit N₂ (6,1 m/min) fluidisiert und dabei von Raumtemperatur in 30 Minuten auf 990°C aufgeheizt. Nach Umschalten auf Prozessgas 40 % CO/59 % H₂ und 1 % H₂O und einer Gesamtreaktionszeit von 6 Stunden und einer nachfolgenden Abkühlung auf Raumtemperatur in 2 Stunden ergab eine XRD-Analyse reines WC ohne Spuren von W₂C oder W. Eine REM-Aufnahme bei 20.000-facher Vergrößerung zeigte eine mittlere WC-Primärgröße (Mikrostruktur) in der schwammstrukturierten WC-Makrostruktur von ca. 0,6 µm.

### Beispiel 15:

WC-Pulver aus Beispiel 14 wurde in einer Jetmühle (AFG 100 von Alpine Hosakawa, Germany) standardmäßig deagglomeriert. Dabei wurde die poröse Makrostruktur zerstört und bis zu der aus den REM-Aufnahmen ersichtlichen WC-Primärkomgrößen deagglomeriert. Eine lasergranulometrisch ermittelte Korngrößenverteilung ergab einen d₅₀ von 0,63 µm. Das deagglomerierte WC-Pulver wurde mit 6 % Co (Standardqualität Co "UMEX 0,9 - Ultrafein" von Union Miniere) und der üblicherweise zugefügten Menge an Kornwachstumshemmer (0,5 % VC) versetzt und in einem Attritor mit 4 mm Durchmesser WC-Co-Kugeln in Aceton für 5 Stunden bei 300 U/min gemahlen. Nach Trocknung und Absiebung wurden standardmäßig Wendeschneidplattenproben gepresst und nachfolgend gesintert.

| | Dichte (g/cm³) | Koerzitivkraft HC (Oe) | 4 Pi Sigma (10⁻⁷ Tm³/kg) | Härte HV30 (daN/mm²) | Porosität |
|---|---|---|---|---|---|
| Beispiel 15 | 14,78 | 471 | 112 | 2031 | < A02; B00; |
| Standardsorte unter Verwendung eines handelsüblichen WC 0,6 µm | 14,8 | 480 | 115 | 2020 | < A02; B00 |

Aus obiger Tabelle ist ersichtlich, dass ein nach diesem Verfahren hergestelltes WC-Pulver für Hartmetall einem standardmäßig hergestellten Submikron wird die absolute Vergleichbarkeit mit einem nach diesem Verfahren hergestellten Hartmetall gegenüber einem standardmäßig hergestelltem Submikron-WC-Pulver vergleichbar.

## Patentansprüche

1. Gaskarburierungsverfahren zur Herstellung von feinkörnigem WC-Pulver, das keine in einer XRD-Analyse nachweisbaren Fremdphasen aufweist, mit einer mittleren Primärkomgröße > 0,2 µm und < 5 µm mit einem Karburierungsgrad > 96 % bei einem freien Kohlenstoffgehalt < 0,1 Gew.% in Anlagen für Fließbettreaktion, vorzugsweise in einer Wirbelschichtanlage, ausgehend von nicht granuliertem fließfähigem Wolfram- oder wolframoxidhaltigem Pulver einer mittleren Korngröße d₅₀ > 10 µm als dem zu karburierenden Gut und von kohlenstoffhaltigem Prozessgas in Form eines COₓ/H₂-Gasgemisches, mit X = 1 und/oder 2, oder eines Gemisches aus Kohlenwasserstoffgas und H₂, ggf. mit kleinen Anteilen an H₂O-Dampf,
**dadurch gekennzeichnet,**
**dass** das zu karburierende Gut in einem einzigen Schritt mit üblicher Aufheizgeschwindigkeit zwischen 1° und 50°C pro Minute unter Schutzgas stetig auf eine Prozesstemperatur von > 900° bis 1200°C gebracht wird, dass mit Erreichen der Prozesstemperatur die Gasatmosphäre in der Anlage von Schutzgas auf Prozessgas umgeschaltet wird, dass das zugeführte Prozessgas 10 bis 100 Vol.% COₓ, Rest H₂ oder auch 0,1 bis 5 Vol.% Kohlenwasserstoffgas, Rest H₂ ist und gleichzeitig während der gesamten Prozessdauer bei Prozesstemperatur eine Kohlenstoffaktivität a_{c} < 1 und möglichst nahe bei 1 im Bereich des zu karburierenden Gutes in der Anlage besitzt.

2. Verfahren zur Herstellung von feinkörnigem WC-Pulver nach Anspruch 1, **dadurch gekennzeichnet, dass** Prozessgas durch eine Wirbelschicht-Reaktionskammer hindurchströmt und nach einem Abgasreinigungsprozess, auf das vorgegebene Gasgemisch gebracht, der Reaktionskammer wieder zugeführt wird.

3. Verfahren zur Herstellung von feinkörnigem WC-Pulver nach Anspruch 1 und 2, **dadurch gekennzeichnet, dass** W-Pulver als das zu karburierende Gut in der Wirbelschichtanlage während < 4 Stunden auf ca. 1.000°C Prozesstemperatur gehalten wird.

4. Verfahren zur Herstellung von feinkörnigem WC-Pulver nach Anspruch 1 und 2, **dadurch gekennzeichnet, dass** Wolframoxid, blau, als das zu karburierende Gut in der Wirbelschichtanlage während < 5 Stunden auf ca. 1.000°C Prozesstemperatur gehalten wird.

5. Verfahren zur Herstellung von feinkörnigem WC-Pulver nach Anspruch 1 bis 4, **dadurch gekennzeichnet, dass** die bei W-Pulver als Ausgangsmaterial die Prozesstemperatur 920° bis 950°C und das Prozessgas CO/H₂ mit 20 bis 40 Vol.% CO-Anteil betragen.

6. Verfahren zur Herstellung von feinkörnigem WC-Pulver nach Anspruch 1 bis 5, **dadurch gekennzeichnet, dass** bei Wolframoxid, blau, als zu karburierendem Gut die Prozesstemperatur 950° bis 1000°C beträgt und das Prozessgas aus CH₄/H₂ mit 2 bis 4 Vol.% CH₄-Anteil, sowie mit zusätzlich 3 Vol.% H₂O während des anfänglichen Reduktionszeitraumes besteht, betragen.

7. Verfahren zur Herstellung eines feinkörnigen WC-Pulvers nach den Ansprüchen 1 bis 6, **dadurch gekennzeichnet, dass** die mittlere Primärkomgröße des WC-Pulvers 0,3 bis 0,8 µm beträgt und das WC-Korn hohe Makroporosität besitzt.

## Claims

1. Gas carburisation process for the production of fine-grained WC powder that has no foreign phases detectable in XRD analysis, having a mean primary grain size > 0.2 µm and < 5 µm with a degree of carburisation > 96 % and a free carbon content < 0.1 wt.%, in moving bed reaction installations, preferably in a fluidised bed installation, starting from non-granulated flowable tungsten powder or tungsten oxide-containing powder having a mean grain size d₅₀ > 10 µm as the material for carburisation, and from carbon-containing process gas in the form of a COₓ/H₂ gas mixture, wherein X = 1 and/or 2, or in the form of a mixture of hydrocarbon gas and H₂, optionally with small amounts of H₂O vapour,
**characterised in that**
the material for carburisation is steadily brought, in a single step, under protecting gas, to a process temperature of from > 900° to 1200°C at a conventional heating rate of from 1° to 50°C per minute, **in that** the gas atmosphere in the installation is changed over from protecting gas to process gas once the process temperature has been reached, **in that** the process gas supplied is from 10 to 100 vol.% COₓ, remainder H₂, or alternatively from 0.1 to 5 vol.% hydrocarbon gas, remainder H₂, and at the same time, throughout the entire process at the process temperature, has a carbon activity a_{c} < 1 and as close as possible to 1 in the region of the material for carburisation in the installation.

2. Process for the production of fine-grained WC powder according to claim 1, **characterised in that** process gas flows through a fluidised bed reaction chamber and, after a waste gas cleaning process, is brought to the specified gas mixture and fed to the reaction chamber again.

3. Process for the production of fine-grained WC powder according to claim 1 and 2, **characterised in that** W powder as the material for carburisation is maintained in the fluidised bed installation for < 4 hours at a process temperature of approximately 1000°C.

4. Process for the production of fine-grained WC powder according to claim 1 and 2, **characterised in that** tungsten oxide blue as the material for carburisation is maintained in the fluidised bed installation for < 5 hours at a process temperature of approximately 1000°C.

5. Process for the production of fine-grained WC powder according to claim 1 to 4, **characterised in that**, when W powder is used as the starting material, the process temperature is from 920° to 950°C and the process gas is CO/H₂ with a CO content of from 20 to 40 vol.%.

6. Process for the production of fine-grained WC powder according to claim 1 to 5, **characterised in that**, when tungsten oxide blue is used as the material for carburisation, the process temperature is from 950° to 1000°C and the process gas consists of CH₄/H₂ with a CH₄ content of from 2 to 4 vol.% and, additionally, with 3 vol.% H₂O during the initial reduction period.

7. Process for the production of a fine-grained WC powder according to claims 1 to 6, **characterised in that** the mean primary grain size of the WC powder is from 0.3 to 0.8 µm and the WC grain has high macroporosity.

## Revendications

1. Procédé de carburation gazeuse pour préparer une poudre de WC en grains fins, qui ne comporte aucune phase étrangère détectable par analyse de XRD, à granulométrie primaire moyenne > 0,2 µm et < 5 µm, à degré de carburation > 96% pour une teneur en carbone libre < 0,1% en poids, dans des installations de réaction à lit fluidisé, de préférence dans une installation à couche turbulente, en partant d'une poudre coulante non granulée contenant du tungstène ou de l'oxyde de tungstène d'une granulométrie moyenne D₅₀ > 10 µm comme produit à carburer et d'un gaz de processus à teneur en carbone consistant en un mélange gazeux CO_{X}/H₂ où X = 1 et/ou 2, ou en un mélange d'hydrocarbures gazeux et de H₂ contenant éventuellement une faible teneur de vapeur de H₂O,
**caractérisé en ce que**
le produit à carburer est amené en une étape unique, constamment sous gaz protecteur, à une température de processus de > 900° à 1200 °C à une vitesse d'échauffement habituelle comprise entre 1° et 50°C par minute, **en ce que** l'atmosphère gazeuse de l'installation est commutée d'un gaz protecteur à un gaz de processus lorsque la température de processus est atteinte, **en ce que** le gaz de processus admis contient, soit de 10 à 100% en volume de COₓ, solde H₂, soit de 0,1 à 5% en volume d'hydrocarbures gazeux, solde H₂, et possède simultanément pendant toute la durée du processus une activité de carbone a_{c} < 1 et aussi proche de 1 que possible à la température de processus dans la zone du produit à carburer dans l'installation.

2. Procédé de préparation de poudre de WC à grains fins selon la revendication 1, **caractérisé en ce que** le gaz de processus traverse une chambre de réaction à couche turbulente et est réadmis dans la chambre de réaction après un processus d'épuration de gaz d'échappement et un ajustement au mélange gazeux prédéfini.

3. Procédé de préparation de poudre de WC à grains fins selon la revendication 1 ou 2, **caractérisé en ce qu'**une poudre de tungstène qui est le produit à carburer est maintenue pendant < 4 heures à une température de processus d'environ 1000°C dans l'installation à couche turbulente.

4. Procédé de préparation de poudre de WC à grains fins selon la revendication 1 ou 2, **caractérisé en ce que** de l'oxyde de tungstène bleu qui est le produit à carburer est maintenu pendant < 5 heures à une température de processus d'environ 1000°C dans l'installation à couche turbulente.

5. Procédé de préparation de poudre de WC à grains fins selon l'une quelconque des revendications 1 à 4, **caractérisé en ce que** la température de processus est de 920° à 950° et le gaz de processus de CO/H₂ contient de 20 à 40% de CO en volume, dans le cas où la poudre de tungstène sert de matière de départ.

6. Procédé de fabrication de poudre de WC à grains fins selon l'une quelconque des revendications 1 à 5, **caractérisé en ce que** la température de processus est de 950° à 1000°C et le gaz de processus CH₄/H₂ contient de 2 à 4% de CH₄ en volume, ainsi que 3% de H₂O en volume pendant la période initiale de réduction, dans le cas où le produit à carburer est de l'oxyde de tungstène bleu.

7. Procédé de fabrication de poudre de WC à grains fins selon l'une quelconque des revendications 1 à 6, **caractérisé en ce que** la granulométrie primaire moyenne de la poudre de WC est de 0,3 à 0,8 µm et que le grain de WC possède une macro-porosité élevée.
